Europäisches Patentamt

European Patent Office

Office européen des brevets

(19)

(11) Publication number: **0 015 707**
**B2**

(12) # NEW EUROPEAN PATENT SPECIFICATION

(45) Date of publication of the new patent specification: **23.03.88**

(21) Application number: **80300571.9**

(22) Date of filing: **27.02.80**

(51) Int. Cl.⁴: **B 60 N 1/00**

(54) **Improvements in and relating to vehicle seats.**

(30) Priority: **12.03.79 GB 7908539**

(43) Date of publication of application:
**17.09.80 Bulletin 80/19**

(45) Publication of the grant of the patent:
**09.02.83 Bulletin 83/06**

(45) Mention of the opposition decision:
**23.03.88 Bulletin 88/12**

(84) Designated Contracting States:
**AT DE NL SE**

(56) References cited:
**DE-A-2 723 789**
**FR-A-2 360 440**
**GB-A- 957 332**
**GB-A-1 156 942**
**GB-A-1 446 565**
**GB-A-1 446 566**
**GB-A-1 553 943**
**GB-A-2 020 968**

(73) Proprietor: **UOP Inc.**
**10 UOP Plaza Algonquin & Mt. Prospect Roads**
**Des Plaines Illinois 60016 (US)**

(72) Inventor: **Barley, Geoffrey Wilfred**
**1195 Tanglewood Court**
**Brookfield Wisconsin 53003 (US)**

(74) Representative: **Taylor, Derek George et al**
**Mathisen, Macara & Co. The Coach House 6-8**
**Swakeleys Road**
**Ickenham Uxbridge UB10 8BZ (GB)**

EP 0015 707 B2

## Description

This invention relates to vehicle seats of the type in which a seat part, normally comprising a seat rest and a back rest, is supported and guided for upward and downward movement relative to a base part by means of a spring suspension. The suspension includes spring means capable of counterbalancing the load of the seat part and its occupant so that the seat part, under static conditions, is located at a mid-ride position substantially midway between UP-stop and DOWN-stop positions. Said spring means can comprise any means of taking up, storing and giving out energy so that the seat and its occupant can oscillate between the UP-stop and DOWN-stop positions when subjected to external forces.

Such a vehicle seat assists in isolating the occupant from vibrations transmitted from the vehicle wheels, particularly as the vehicle passes over rough terrain. However, the necessary freedom of the seat part to move up and down carries with it the danger, in the case of a driver's seat, of the driver's feet losing correct contact with the control pedals.

Previous attempts to overcome this difficulty have largely been based on the concept that the seat part of a suspension seat should move pivotally about a horizontal axis through the knee-hinges of the driver, since if such a knee-hinge axis (sometimes referred to herein as the K axis) is fixed relative to the base part of the seat, the lower leg, and hence the ankles, of the driver can remain stationary irrespective of the movements of the seat. However, if the seat rest and back rest of a seat part move in this way, the driver's back inclination will vary with rise and fall of the seat. This difficulty can be overcome by incorporating a linkage to change the inclination of the back rest with changes in the inclination of the seat rest. An example of a suspension seat designed in this way is found in British Patent Specification No. 1,156,942.

Another example of such a seat is found in GB—A 1446565 in which the back rest is caused to swing about two transverse axes disposed one above the other in a vertical plane close to the front of the seat rest.

Such suspension seats have the disadvantage of a relatively large fore and aft movement of the entire part of the driver's body above his hip (H axis), since the knee hinge axis is the axis about which the seat rest and the hip region of his body is arranged to swing.

It is also known from DE—A1 2 723 789 and FR—A1 236044 to provide a vehicle seat comprising a seat part, which includes a seat rest and a back rest, a base part, and means connecting the seat part to the base part, said means comprising a spring suspension by which the back rest is supported on the base part and which is effective to restrict movement of the back rest to a substantially vertical direction and in which the suspension comprises supporting means for effecting movement of the seat rest relative to the back rest about a first horizontal transverse axis, fixed relative to the back rest. Although the seat described in these prior specifications has a back rest which is contrained to move vertically, the seat rest is still supported for movement about the knee hinge axis of the seat occupant, so that unnecessarily large movements of the seat occupants body will result.

The present invention is based on the realisation that if a suspension seat can be designed to move in such a way that the seat occupant's lower leg will move about a horizontal transverse axis through the occupant's ankle hinges (A axis), with very little, if any, fore and aft movement of the occupant's hips, the knee hinge axis accordingly being free to swing about the ankle hinge axis, such a seat will afford the driver a high degree of control over the vehicle over a wide range of seat movement. Moreover, it is found that a seat movable in this way affords a high degree of comfort to the driver.

The present applicants have devised a method of locating the instantaneous centres of rotation of the thigh of a seat occupant in relation to those parts of a seat suspension, including the base part, which move relatively to the thigh of the seat occupant as the seat rises and falls. In such a method, the thigh and lower leg of the seat occupant are considered as links in a mechanism in which the ankle hinges of the seat occupant are located on a fixed transverse axis at A. Accordingly if a seat rest for supporting the thighs of the seat occupant is pivotally supported on parallel-spaced horizontal transverse axes through such centres, the movement of the seat rest will not cause any displacement of the ankle-hinge axis at A.

Such instantaneous centres are not however always practical locations at which to support the seat rest, and a close approximation to an ideal arrangement can be achieved in other ways.

According to the present invention there is provided a vehicle seat comprising a seat part, which includes a seat rest and a back rest, a base part, and means connecting the seat part to the base part, said means comprising a spring suspension by which the back rest is supported on the base part and which is effective to restrict movement of the back rest to a substantially vertical direction, and in which the suspension comprises supporting means for effecting movement of the seat rest relative to the back rest about a first horizontal transverse axis, fixed relative to the back rest and coaxial with the hip joint of the seat occupant, and relative to the base part, about a second horizontal transverse axis, the supporting means including a first pivot connection between the seat rest and the base part, and a second pivot connection between the seat rest and the seat part, at least the second horizontal transverse axis being spaced from the instantaneous centre of rotation of the thigh of a seat occupant relative to the corresponding one of said seat part and said base part, the arrangement of the vehicle seat being such that in use the seat occupant's lower leg is caused to move pivotally about his ankle-hinge axis characterised by said second horizontal transverse axis being so located that the instantaneous directions of motion of the said first pivot connection at the mid-ride position of the seat is the same as if the second horizontal transverse axis were located at the instantaneous centre of rotation of the thigh relative to said base part.

The invention will now be described, by way of example only, with reference to the accompanying drawings in which:—

Figure 1 is a diagrammatic side elevation, part sectioned, of a vehicle seat in accordance with the invention;

Figure 2 is a diagrammatic representation in skeletal form of the means for supporting the seat rest of the seat of Figure 1 in combination with another type of suspension for supporting the back rest of the seat, and

Figure 3 is a diagrammatic representation of a modification of the seat supporting means of Figure 2.

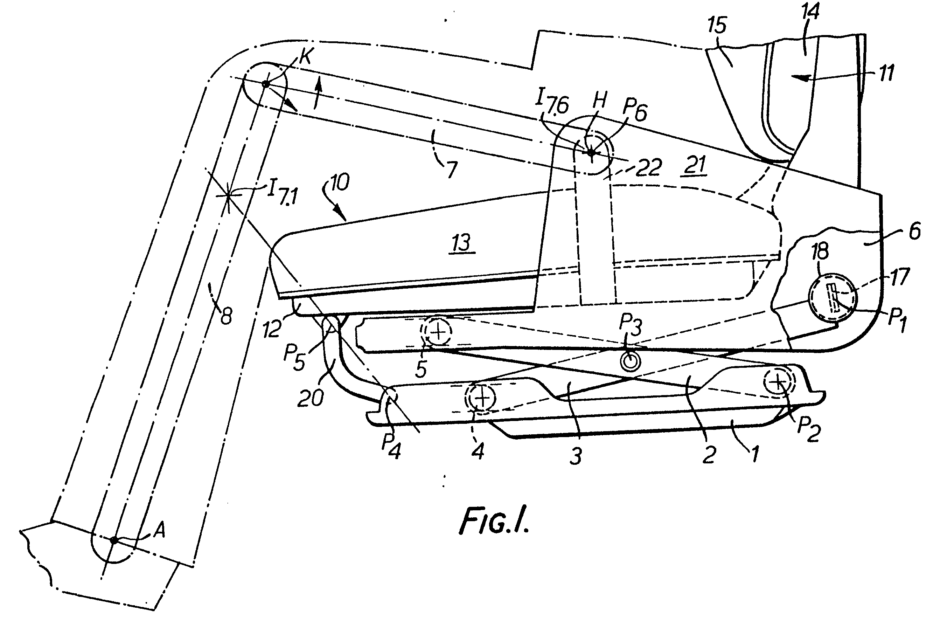

The seat shown in Figure 1 includes an X type suspension of a well known type described for example in British Patent Specification No. 957,332 to which attention is directed for a detailed explanation of its construction and operation.

Briefly the seat comprises a base part 1, and two pairs of scissor links spaced transversely of the seat, only one being visible, this pair consisting of first and second links 2, 3. Link 3 is connected at its forward end by a roller or slider 4 to the base part 1 and by a fixed pivot $P_1$ at its rearward end to a seat frame 6. Link 2 is connected at its forward end by a roller or slider 5 to the seat frame 6 and by a fixed pivot $P_2$ at its rearward end to the base part 1. Links 2 and 3 have a pivotal interconnection $P_3$ at their intersection. The upper leg or thigh of the seat occupant will be looked upon as a link 7 and the lower leg as a link 8 pivoted at the ankle hinge point A to the floor, and hence to the base part 1.

It is considered, in this connection, that the thigh of the seat occupant extends between the knee-hinge point K and a point H which is either at the centre of the hip joint or preferably at a "preferred pivot point" which is somewhat behind the true hip joint. This is the point about which the thigh effectively rotates relative to seat frame 6.

The seat part is seen to consist of the seat frame 6 together with the seat rest 10 and back rest 11 supported on frame 6. The seat rest 10 consists of a seat pan 12 covered by a seat cushion 13, and back rest 11 consists of a back pan 14 and back cushion 15.

The spring means for supporting the seat part 6, 10, 11 of the base part 1 is a torsion bar 17 extending within a tube 18 to which the upper rearward end of each link 3 is secured.

The tube 18 is journalled at its ends in the seat frame 6. One end of bar 17 is secured to one end of tube 18 and the opposite end of bar 17 is connected to the frame 6 via a preload adjustment mechanism (not shown). Manual operation of this mechanism by the seat occupant enables the preload in the torsion bar 17 to be varied.

It can be shown by the application of known mechanical principles and in particular by the Method of Instantaneous Centres of Rotation, that if the seat rest is pivoted about horizontal transverse axes through selected instantaneous centres of rotation of the thigh 7 of the seat occupant about parts of the seat on which the seat rest is supported, the seat rest will tilt forwardly or backwardly with rise and fall of the seat. This tilting will occur in such a way that although the knee hinge axis at K will swing about the ankle hinge axis at A, displacement of the ankle hinge axis will not occur. Two such instantaneous centres are $I_{7.1}$ and $I_{7.6}$ so that by pivotally supporting the seat rest on base 1 at point $I_{7.1}$, (i.e. by extending base 1 up to the point $I_{7.1}$ and pivotally connected at rigid link from $I_{7.1}$ to the seat rest), the ideal movement of the seat rest can be achieved for small deflections away from the mid-ride position.

The pivotal support at $I_{7.1}$ is inconvenient but can be approximated to by the provision of a rigid link 20 connected at its rearward lower end to a pivotal connection $P_4$ on the base 1 and at its forward upper end by a pivotal connection $P_5$ on the seat pan 12 of the seat rest 10. Since $P_5$ is located on the straight line connecting $I_{7.1}$ and $P_4$ the movement of the front of the seat rest 10 will closely approach that which would occur if link 20 were pivoted at points $I_{7.1}$ and $P_5$ instead, base 1 having been extended upwardly to point $I_{7.1}$.

The mounting of the seat rest 10 for pivotal movement about point $I_{7.6}$ is effected by providing a side member 21 of any convenient shape mounted on each side of frame 6 and so located as to be intersected by the transverse horizontal axis through $I_{7.6}$. An arm 22 rigidly secured to each side of the seat pan 12 extends upwardly therefrom to a pivotal connection $P_6$ on the corresponding side member 21 at $I_{7.6}$.

Thus, in operation of the seat, the seat frame 6 and back rest 11 will rise and fall vertically under the guidance of links 2 and 3. Since the only connection between the seat rest 10 and the frame 6 is at $P_6$, although the part of the seat rest 10 adjacent $P_6$ will rise and fall with the frame 6, the movement of the front of the seat rest 10 will be dictated by the link 20 connected between base 1 and seat pan 12 at $P_4$ and $P_5$. Thus as the frame 6 rises thereby tilting the thigh 7 in an anti-clockwise direction about $I_{7.1}$, the front of the seat 10 will fall relative to frame 6. The knee hinge K will therefore be permitted to swing in a clockwise direction about ankle hinge A as indicated by arrows, if $I_{7.6}$ is above K.

In the description which follows, the references used in Figure 1 will be retained so far as possible to represent the same type of parts as shown in Figure 1 in spite of minor variations in the shape and function of the parts, in order to avoid confusion by adopting different references.

References 2 and 3 will denote any two links by means of which the seat part is mounted on the base part.

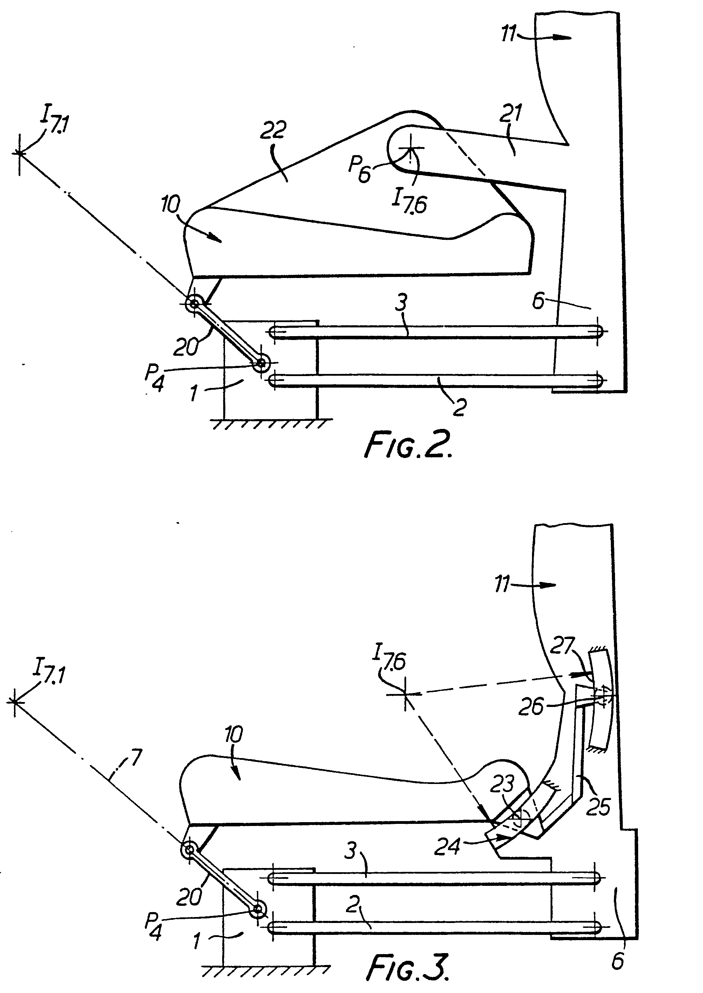

Figure 2 shows a seat frame 6 which supports a back rest 11, the frame 6 itself being supported on a base part 1 by parallel links 2, 3 pivoted at their ends respectively to base part 1 and frame 6. Thus the links 2 and 3 guide the frame 6 for substantially vertical movement. Seat part 10 is supported, as in the embodiment of Figure 1, by a link 20 pivoted at its ends to base part 1 and seat part 10. To the rear of seat part 10, arm 22 rigidly connected thereto is pivoted by pivotal connection $P_6$ at point $I_{7.6}$ to side member 21 of the frame 6.

The inconvenience of the side members 21 and arm 22 of Figure 2 can be avoided by the modification of Figure 3. In Figure 3, the seat part 10 is provided with a roller or slider 23 which engages a surface 24 which is fixed to the frame 6 and is arcuate about the point $I_{7.6}$. Thus roller or slider 23 moves as though it were suspended from $I_{7.6}$. In order to restrain the forward movement of roller 23, a link 25 rigidly connected to seat part 10 connects the rearward part of seat rest 10 to a roller or slider 26 which rides on a guide surface 27 fixed to the frame 6 and arcuate about $I_{7.6}$ at a location sufficiently spaced from roller 23 to provide stability.

Thus in each of the embodiments of Figures 1, 2 and 3, the seat rest pivots about a first horizontal transverse axis through the instantaneous centre $I_{7.6}$ and about a second horizontal transverse axis through the point $P_4$ which closely approximates in effect to rotation about the instantaneous centre $I_{7.1}$.

Although Figures 1 to 3 illustrate five different embodiments of the invention, further embodiments can be formed by different combinations of the features shown in the drawings. For example, in the embodiment of Figure 1, the rearward pivot connection for the seat part at $P_6$ could be replaced by the rearward pivot connection shown in Figure 3.

Attention is directed to our copending European Patent Application Serial No. 16556, Application No. 80 300 570.1 which contains some disclosure in common with that of the present application and describes, in greater detail, the principles of construction which are common to the two applications.

## Claims

1. A vehicle seat comprising a seat part, which includes a seat rest (10) and a back rest (11), a base part (1), and means connecting the seat part to the base part, said means comprising a spring suspension by which the back rest is supported on the base part and which is effective to restrict movement of the back rest to a substantially vertical direction, and in which the suspension comprises supporting means for effecting movement of the seat rest relative to the back rest about a first horizontal transverse axis (H), fixed relative to the back rest and coaxial with the hip joint of the seat occupant, and relative to the base part, about a second horizontal transverse axis ($P_4$), the supporting means including a first pivot connection ($P_5$) between the seat rest and the base part, and a second pivot connection ($P_6$) between the seat rest and the seat part, at least the second horizontal transverse axis ($P_4$) being spaced from the instantaneous centre of rotation of the thigh (7) of a seat occupant relative to the corresponding one of said seat part and said base part, the arrangement of the vehicle seat being such that in use the seat occupant's lower leg is caused to move pivotally about his ankle-hinge axis (A) characterised by said second horizontal transverse axis ($P_4$) being so located that the instantaneous directions of motion of the said first pivot connection ($P_5$) at the mid-ride position of the seat is the same as if the second horizontal transverse axis ($P_4$) were located at the instantaneous centre ($I_{7.1}$) of rotation of the thigh (7) relative to said base part.

2. A vehicle seat according to claim 1 characterised in that one of said pivot connections is provided by a rigid link (20) located at the front of the seat and pivoted at its lower end to the base part and at its upper end to the front of said seat part.

3. A vehicle seat according to claim 1 characterised in that the means connecting the seat part to the base part comprise a link (2—Figures 4 and 5) having a pivot connection between its forward upper end and the frame (6) and a pivot connection ($P_2$) between its rearward lower end and the base part (1), said link (2) having a fixed pivot connection (30) adjacent its forward upper end to the seat rest (10) adjacent the front thereof, said connection (30) being located on a first of said horizontal axes.

4. A vehicle seat according to claim 2 or claim 3 characterised in that said pivot connections comprise pivots ($P_6$) located on a second said horizontal transverse axis and supported on said frame (6), and pivot arms (22—Figure 1 and Figure 2) rigidly secured to the seat rest and suspended from said pivots.

5. A vehicle seat according to claim 2 or claim 3 characterised in that said supporting means comprise rollers or sliders (23 and 26 Figure 3) mounted on said seat rest (10) and arranged to move in contact with surfaces (24 and 27) fixed to said frame (6) and part-cylindrical about a horizontal transverse axis through one said instantaneous centre ($I_{7.6}$), to constrain the movement of said part (10) about said axis through one said instantaneous centre ($I_{7.6}$) relative to the frame (6).

## Patentansprüche

1. Fahrzeugsitz mit einem Sitzteil, das eine Sitzauflage (10) und eine Rückenlehne (11) aufweist, mit einem Basisteil (1) und mit das Sitzteil mit dem Basisteil verbindenden Mitteln, welche eine Federaufhängung aufweisen, durch die die Rückenlehne am Basisteil gehalten ist und die die Bewegung der Rückenlehne auf eine im wesentlichen vertikale Richtung beschränkt, und bei dem die Aufhängung Stützmittel aufweist, um eine Bewegung der Sitzauflage relativ zur Rückenlehne um eine erste horizontale Quereasche (H), die in bezug auf die Rückenlehne fest und koaxial zum Hüftgelenk der Sitzenden ist, und relativ zum Basisteil um eine zweite horizontale Querachse ($P_4$) zu ermöglichen, wobei die Stützmittel eine erste Schwenkverbindung ($P_5$) zwischen der Sitzauflage und dem Basisteil und eine zweite Schwenkverbindung ($P_6$) zwischen der Sitzauflage und dem Sitzteil aufweisen, wenigstens die zweite horizontale Querachse ($P_4$) im Abstand vom Momentandrehzentrum einer Drehung der Oberschenkel (7) eines Sitzenden relativ zum entsprechenden Teil, Sitzteil oder Basisteil, angeordnet ist, und die Anordnung des Fahrzeugsitzes so getroffen ist, daß bei Benützung der untere Teil des Beines des Sitzenden in einer Schwenkbewegung um seine Knöchelgelenksachse (A) bewegt wird, gekennzeichnet durch eine derartige Anordnung der zweiten horizontalen Querachse ($P_4$), daß die momentane Bewegungsrichtung der ersten Schwenkverbindung ($P_5$) in einer mittleren Sitzposition die gleich ist, als ob die zweite horizontale Querachse ($P_4$) im Momentandrehzentrum ($I_{7.1}$) einer Drehung der Oberschenkel (7) relativ zum Basisteil angeordnet wäre.

2. Fahrzeugsitz nach Anspruch 1, dadurch gekennzeichnet, daß eine der Schwenkverbindungen durch eine steife Kupplung (20) vorgesehen ist, die an der Vorderseite des Sitzes angeordnet und am unteren Ende mit dem Basisteil und am oberen Ende mit der Vorderseite des Sitzteiles schwenkbar verbunden ist (Fig. 1, 2, 3).

3. Fahrzeugsitz nach Anspruch 1, dadurch gekennzeichnet, daß die den Sitzteil mit dem Basisteil verbindenden Mittel ein Glied (2) aufweisen, das eine Schwenkverbindung zwischen seinen vorderen oberen Ende und dem Rahmen (6) und eine Schwenkverbindung ($P_2$) zwischen seinem hinteren unteren Ende und dem Basisteil (1) aufweist, wobei dieses Glied (2) eine feste Schwenkverbindung (30) nahe seinem vorderen oberen Ende zur Sitzauflage (10) nahe deren Vorderseite aufweist, wobei diese Schwenkverbindung (30) auf einer ersten der genannten Achsen liegt.

4. Fahrzeugsitz nach Anspruch 2 oder 3, dadurch gekennzeichnet, daß die Schwenkverbindungen Gelenke ($P_6$), die auf einer zweiten der genannten horizontalen Querachsen liegen und vom Rahmen (6) getragen sind, und Schwenkarme (22; Fig. 1 und Fig. 2) aufweisen, die starr an der Sitzauflage befestigt und an den Gelenken aufgehängt sind.

5. Fahrzeugsitz nach Anspruch 2 oder 3, dadurch gekennzeichnet, daß die Stützmittel Rollen oder Gleitstücke (23 und 26; Fig. 3) aufweisen, die an der Sitzauflage (10) befestigt und so angeordnet sind, daß sie sich in Berührung mit Flächen (24 und 27) bewegen, die am Rahmen (6) befestigt sind und teilzylindrisch um eine horizontale Querachse durch eines der Momentandreh-

zentren ($I_{7.6}$) verlaufen, um eine Bewegung des Sitzteiles (10) um diese Achse durch das eine der Momentandrehzentren ($I_{7.6}$) relativ zum Rahmen (6) zu beschränken.

## Revendications

1. Siège de véhicule, comprenant une partie formant siège qui comporte une assise (10) et un dossier (11), une partie de base (1), et un dispositif de raccordement de la partie formant siège sur la partie de base, ce dispositif comprenant une suspension élastique supportant le dossier sur la partie de base et qui limite le déplacement du dossier à une direction sensiblement verticale, la suspension comprenant un dispositif de support destiné à assurer le déplacement de l'assise par rapport au dossier autour d'un premier axe transversal horizontal (H) fixe par rapport au dossier et coaxial à l'articulation de la hanche de l'occupant du siège, et par rapport à la partie de base autour d'un second axe transversal horizontal ($P_4$), le dispositif de support comprenant une première articulation ($P_5$) entre l'assise et la partie de base et une second articulation ($P_6$) entre l'assise et la partie de base, au moins le second axe transversal horizontal ($P_4$) étant distant du centre de rotation instantanée de la cuisse (7) d'un occupant du siège par rapport à la partie correspondante du siège, l'assise ou la partie de base, l'agencement du siège de véhicule étant tel que, pendant l'utilisation, la jambe de l'occupant du siège est amenée à pivoter autour le l'axe (A) de sa cheville, caractérisé en ce que le second axe transversal horizontal ($P_4$) est disposé de manière que les directions instantanées de mouvement de la première articulation ($P_5$) à la position de mi-course du siège soient les mêmes que si le second axe transversal horizontal ($P_4$) était disposé au centre de rotation instantanée ($I_{7.1}$) de la cuisse par rapport à la partie de base.

2. Siège de véhicule selon la revendication 1, caractérisé en ce que l'une des articulations est formée par un accouplement rigide (20) placé à l'avant du siège et articulé à son extrémité inférieure sur la partie de base et à son extrémité supérieure à l'avant de la partie formant siège (Fig. 1, 2, 3).

3. Siège de véhicule selon la revendication 1, caractérisé en ce que le dispositif de raccordement de la partie formant siège à la partie de base comporte une bielle (2) ayant une articulation entre son extrémité supérieure avant et le châssis (6) et une articulation ($P_2$) entre son extrémité inférieure arrière et la partie de base (1), la bielle (2) ayant, à proximité de son extrémité supérieure avant, une articulation fixe (30) sur l'assise (10) à proximité de l'avant de celli-ci, cette articulation (30) se trouvant sur un premier des axes horizontaux.

4. Siège de véhicule selon l'une des revendications 2 et 3, caractérisé en ce que les articulations comportent des pivots ($P_6$) placés suivant un second axe transversal horizontal, et supportés sur le châssis (6), et des bras (22—Fig. 1 et Fig. 2) fixés rigidement à l'assise et suspendus aux pivots.

5. Siège de véhicule selon l'une des revendications 2 et 3, caractérisé en ce que le dispositif de support comporte des galets ou coulisseaux (23 et 26, Fig. 3) montés sur l'assise (10) et destinés à se déplacer au contact de surfaces (24 et 27) fixées au châssis'(6) et ayant une forme en partie de cylindre autour d'un axe horizontal transversal passant par un centre instantané de rotation ($I_{7,6}$) afin que le déplacement de la partie formant siège (10) par rapport au châssis (6) soit limité à un déplacement autour de l'axe passant par l'un des centres de rotation instantanée ($I_{7,6}$).

FIG.I.

0 015 707

0 015 707

FIG.2.

FIG.3.

2